# EUROPÄISCHE PATENTSCHRIFT

(11) **EP 1 353 813 B1**
(45) Veröffentlichungstag und Bekanntmachung des Hinweises auf die Patenterteilung: **27.07.2005**
(21) Anmeldenummer: 01991854.9
(22) Anmeldetag: 15.12.2001
(51) Int. Cl.: B60G 17/02

(54) **FEDERTRÄGER**
SPRING CARRIER
SUPPORT DE RESSORT

(30) Priorität: 15.01.2001 DE 10101694
(43) Veröffentlichungstag der Anmeldung: 22.10.2003
(73) Patentinhaber: Thyssenkrupp Automotive AG, 44793 Bochum (DE)
(72) Erfinder: LÖSER, Friedrich, D-85521 Riemerling (DE); ELLMANN, Siegfried, 85609 Aschheim (DE)
(86) Internationale Anmeldenummer: PCT/EP2001/014856
(87) Internationale Veröffentlichungsnummer: WO 2002/055326

(56) Entgegenhaltungen:
- DE-A- 10 122 542
- DE-A- 19 510 032
- DE-A- 19 955 410
- DE-C- 934 332
- FR-A- 2 153 041
- US-A- 5 678 847

## Beschreibung

Die Erfindung betrifft einen Federträger für ein Fahrzeugfahrwerk, wobei wenigstens ein Federteller gegenüber dem Fahrzeugaufbau oder dem Radträger axial verstellbar ist, nach dem Oberbegriff des Anspruchs 1.

Derartige axial verstellbare Federträger finden in Fahrzeugen Verwendung, wenn die Bodenfreiheit des Fahrzeuges veränderbar sein soll. Das kann dadurch erforderlich sein, dass nach Beladung eines Fahrzeugs das Einsinken beispielsweise der hinteren Radlagerung ausgeglichen werden soll. Derartige Federträger werden jedoch auch für Onroad/Offroad-Fahrzeuge eingesetzt, um die Bodenfreiheit bei Offroad-Fahrten anzuheben. Ebenso werden diese Federträger eingesetzt beispielsweise bei Bussen, wenn diese an Haltestellen einseitig zum Bordstein abgesenkt werden. Weiterhin können dynamische Nick- und Wankbewegungen des Aufbaus ausgeglichen werden, um beispielsweise den Aufbau unabhängig von der Fahrbahnunebenheit zu horizontieren.

Ein gattungsgemäßer Federträger ist aus der DE 195 10 032 A1 bekannt. Nachteilig bei diesem Federträger wird eine große Bauhöhe zwischen dem Fahrzeugaufbau und dem oberen Federteller benötigt, wodurch die Kolbenstange des Stoßdämpfers oder Federbeins besonders lang und damit knickanfällig ausgebildet sein muss bzw. was den Einsatz dieses Federträgers für Federbeine erschwert. Des Weiteren erfordert der hier beschriebene Federträger eine große Anzahl von mechanischen Bauteilen, wodurch er hohe Herstellungskosten erfordert.

Aus der DE-C-934 332 ist eine Abfederung für Fahrzeuge bekannt, bei der der Hauptfederung eine oder mehrere Hilfsfedern zugeordnet sind, die entsprechend den jeweiligen Fahrverhältnissen durch einen Elektromotor zu- und abschaltbar sind. Der Elektromotor ist dabei als Ringmotor ausgebildet, der koaxial zu einer von einem Rotor angetriebenen Gewindespindel angeordnet ist. Die aus dieser Druckschrift bekannte Fahrzeugfederung arbeitet vollständig ohne Stoßdämpfer, d.h. ein eine Kolbenstange und ein Stoßdämpferrohr aufweisender Stoßdämpfer ist nicht vorhanden.

Der Erfindung liegt die Aufgabe zugrunde, einen gattungsgemäßen Federträger derartig weiterzuentwickeln, dass der Abstand zwischen dem oberen Federende und dem Fahrzeugaufbau geringgehalten werden kann. Weiterhin soll eine kostengünstige Lösung angestrebt werden.

Diese Aufgabe wird erfindungsgemäß mit den Merkmalen des Anspruchs 1 gelöst. Vorteilhafte Aus- und Weiterbildungen sind in den Ansprüchen 2 bis 8 beschrieben.

Der erfindungsgemäße Federträger weist den Vorteil auf, dass er keine zusätzliche Bauhöhe benötigt. Dadurch kann er auch ohne besondere Umkonstruktionsmaßnahmen für übliche Federbeinkonstruktionen eingesetzt werden. Auch beim Einsatz bei normalen Feder-Stoßdämpfer-Kombinationen müssen weder andere Stoßdämpfer noch andere Federn eingesetzt werden, wenn alternativ zur normalen Federabstützung ein axial verstellbarer Federträger eingesetzt wird. Weiterhin vorteilhaft weist der erfindungsgemäße Federträger nur wenige Bauteile auf und kann dadurch kostengünstig hergestellt werden.

Ein Ausführungsbeispiel der Erfindung ist in der Zeichnung dargestellt und wird im Folgenden näher beschrieben. Es zeigen
Fig. 1 einen Längsschnitt durch einen Federträger einschl. Feder und Stoßdämpfer und
Fig. 2 eine vergrößerte Darstellung der Verstelleinrichtung.

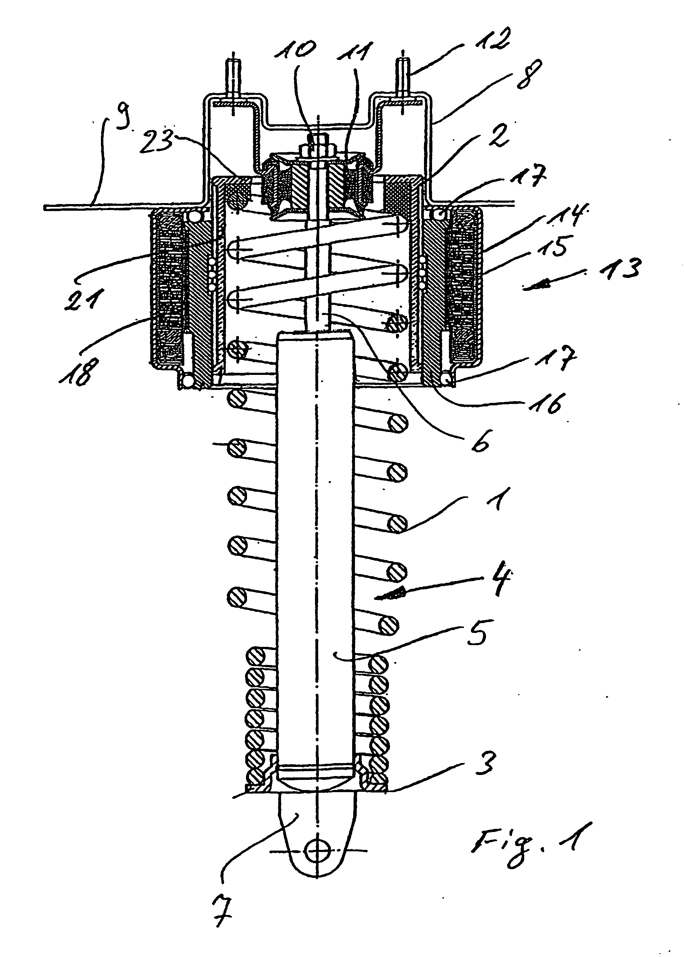

Der in Fig. 1 dargestellte Federträger dient zur Aufnahme einer Wendelfeder 1. Diese Wendelfeder 1 stützt sich endseitig gegen zwei Federteller 2, 3 ab. Zentral innerhalb der Wendelfeder 1 ist ein Stoßdämpfer 4 mit einer oszillierend axial in ein Stoßdämpferrohr 5 eintauchenden Kolbenstange 6 angeordnet. Am unteren Ende des Stoßdämpferrohrs ist ein unterer Federteller 3 angeordnet, der axial über eine Nut-Sprengring-Sicherung lagegesichert ist. Die Anbindung der Radaufhängung erfolgt über einen Anbindungsflansch 7.

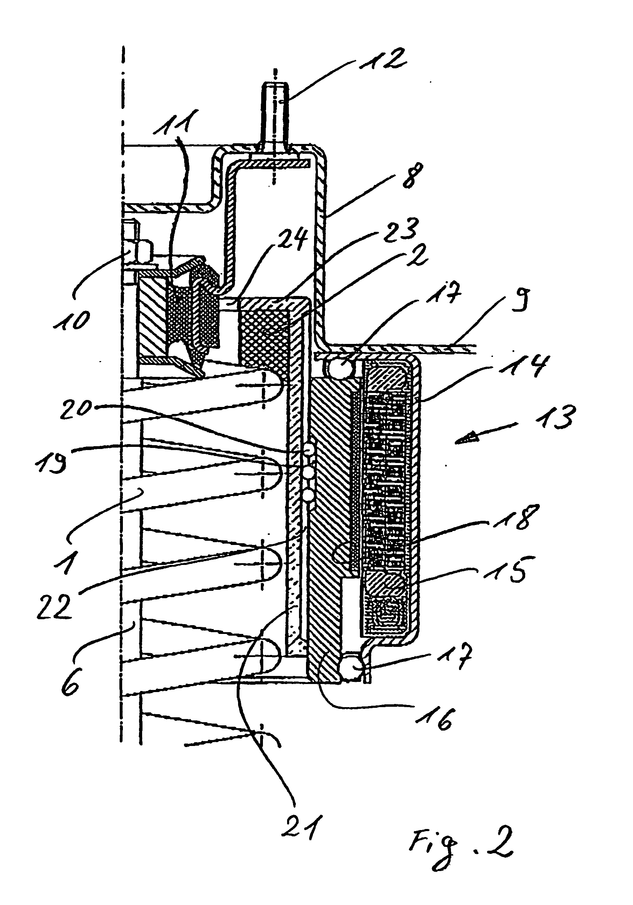

Der obere Teil der Anbindung der Kolbenstange 6 und der Wendelfeder 1 an die Verstelleinrichtung bzw. an den Fahrzeugaufbau ist in Fig. 2 in einem vergrößerten Halbschnitt dargestellt. Die Anbindung der Kolbenstange 6 erfolgt in bekannter Weise an einer domförmigen Aufwölbung 8 eines Bauteils 9 des Fahrzeugaufbaus. Hierzu wird die Kolbenstange 6 mittels einer Mutter 10 an einem winkelelastisch und stoßelastisch ausgebildeten Anschlussteil 11 angeschraubt, welches wiederum mittels Schraubbolzen 12 an der Aufwölbung 8 angebunden ist.

Eine Verstelleinrichtung 13 liegt mit seinem Außengehäuse 14 an der Unterseite des Bauteils 9 an und ist mit diesem mittels nicht dargestellter Mittel verbunden. Die Verbindung kann auch über stoßelastische, vibrationsdämpfende Elemente erfolgen. In gleicher Weise könnte das Außengehäuse 14 aber auch innerhalb der Aufwölbung 8 liegen.

Innerhalb des Außengehäuses 14 ist der Stator 15 eines Ringmotors angebracht. Er besteht im Wesentlichen aus elektrischen Wicklungen, die zusammen mit Trafoblechpaketen ein elektromagnetisches Feld erzeugen. Die elektrischen Wicklungen, die Trafobleche sowie eventuell auch Sensoren und elektrische oder elektronische Bauteile der Steuer- und Auswerteelektronik sind vorzugsweise mittels einer später aushärtenden Kunststoffmasse in das Außengehäuse 14 eingegossen.

Der Rotor 16 des Ringmotors ist über Kugellager 17 drehbar mit dem Stator 15 verbunden. Der Rotor 16 ist an seiner Außenseite mit Permanentmagneten 18 versehen, die elektromagnetisch mit den Wcklungen und Blechpaketen des Stators zusammenwirken. In gleicher Weise können hier aber auch elektrische Spulen verwendet werden, wenn dieses für ein anderes Motorkonzept sinnvoll ist. Der eigentliche Rotorkörper ist direkt mit den Laufbahnen für das Kugellager 17 ausgebildet und trägt an der Innenseite die muttemseitigen Laufbahnen 19 einer Kugelrollspindel. Ober die zugehörigen Kugeln 20 ist der Rotor 16 mit einem Federtellerträger 21 verbunden, welcher wiederum an seiner Außenseite mit den spindelseitigen Laufbahnen 22 einer Kugelrollspindel versehen ist Da der Federtellerträger 21 über die Anlage der Wendelfeder 1 an einer Rotationsbewegung gehindert ist, bewegt er sich beim Rotieren des Rotors 16 axial, je nach Drehrichtung des Rotors 16 abwärts oder aufwärts. Zur Reduktion des Baudurchmessers können die Permanentmagnete des Rotors 16 auch örtlich versetzt neben der Kugelrollspindel angeordnet sein.

Der Federtellerträger 21 kann darüber hinaus durch geeignete Führungseinrichtungen beispielsweise an der Aufwölbung 8 am Rotieren gehindert werden. Dieses ist jedoch nicht unbedingt erforderlich.

Die Wendelfeder 1 liegt innerhalb des Federtellerträgers 21, der rohrförmig ausgebildet ist, mit ihrem Ende vor dem oberen Federteller 2. Dieser wiederum stützt sich axial gegen einen am federfemen Ende des Federtellerträgers 21 angebrachten Boden 23 ab. Der Boden 23 ist mit einer zentralen Öffnung 24 ausgebildet und kann somit das Anschlussteil 11 in axialer Richtung radial übergreifend überfahren. Damit kann der obere Federteller 2 bis in die Aufwölbung 8 hinein verfahren werden.

### Bezugszeichenliste

- 1.: Wendelfeder
- 2.: Federteller
- 3.: Federteller
- 4.: Stoßdämpfer
- 5.: Stoßdämpferrohr
- 6.: Kolbenstange
- 7.: Anbindungsflansch
- 8.: Aufwölbung
- 9.: Bauteil
- 10.: Mutter
- 11.: Anschlussteil
- 12.: Schraubbolzen
- 13.: Verstelleinrichtung
- 14.: Außengehäuse
- 15.: Stator
- 16.: Rotor
- 17.: Kugellager
- 18.: Permanentmagnet
- 19.: Laufbahn
- 20.: Kugel
- 21.: Federtellerträger
- 22.: Laufbahn
- 23.: Boden
- 24.: Öffnung

## Patentansprüche

1. Federträger für ein Fahrzeugfahrwerk zur Abstützung einer zwischen zwei Federtellern (2, 3) verspannten Wendelfeder (1) mit mindestens einem axial, mittels einer Antriebseinheit mit Getriebe und Elektromotor verstellbaren Federteller (2), wobei mindestens ein Bereich der Kolbenstange (6) und/oder des Stoßdämpferrohrs (5) eines Stoßdämpfers oder Federbeins innerhalb der Wendelfeder (1) angeordnet ist, **dadurch gekennzeichnet, dass** der Elektromotor als Ringmotor mit einem außen liegenden Stator (15) und einem innen liegenden Rotor (16) ausgebildet ist und der Rotor (16) innenseitig eine Bewegungsmutter trägt, die einen außenseitig als Gewindespindel ausgebildeten, mit einem der Federteller (2) verbundenen Federtellerträger (21) axial verstellt.

2. Federträger nach Anspruch 1, **dadurch gekennzeichnet, dass** Bewegungsmutter und Federtellerträger (21) als Kugelrollspindel ausgebildet sind.

3. Federträger nach Anspruch 1 oder Anspruch 2, **dadurch gekennzeichnet, dass** Rotor (16) und Bewegungsmutter einteilig ausgebildet sind.

4. Federträger nach einem oder mehreren der Ansprüche 1 bis 3, **dadurch gekennzeichnet, dass** der Elektromotor als Induktionsmotor ausgebildet ist.

5. Federträger nach einem oder mehreren der Ansprüche 1 bis 4, **dadurch gekennzeichnet, dass** der Federtellerträger (21) rohrförmig ausgebildet ist und ein Abschnitt der Wendelfeder (1) innerhalb des Federtellerträgers (21) liegt.

6. Federträger nach Anspruch 5, **dadurch gekennzeichnet, dass** der Federteller (2) im der Wendelfeder (1) abgewandten Endbereich innerhalb des Federtellerträgers (21) angeordnet ist.

7. Federträger nach Anspruch 6, **dadurch gekennzeichnet, dass** der Federtellerträger (21) einen geschlossenen oder mit einer zentralen Öffnung (24) versehenen Boden (23) aufweist, gegen den sich der Federteller (2) abstützt.

8. Federträger nach einem oder mehreren der Ansprüche 1 bis 7, **dadurch gekennzeichnet, dass** der Federtellerträger (21) und der Federteller (2) einteilig ausgebildet sind.

## Claims

1. Spring bracket for a motor vehicle chassis to support a coiled spring (1) braced between two spring plates (2, 3) and having at least one spring plate (2) which can be axially displaced by means of a drive unit with a transmission and electric motor, wherein at least one region of the piston rod (6) and/or of the shock absorber pipe (5) of a shock absorber or of a spring leg is disposed inside the coiled spring (1), **characterised in that** the electric motor is formed as a ring motor with an external stator (15) and an internal rotor (16) and the rotor (16) supports a movement nut on the inside which axially displaces a spring plate bracket (21) which is connected to one of the spring plates (2) and is formed externally as a threaded spindle.

2. Spring bracket as claimed in claim 1, **characterised in that** the movement nut and spring plate bracket (21) are formed as a ball screw.

3. Spring bracket as claimed in claim 1 or claim 2, **characterised in that** the rotor (16) and movement nut are formed as one piece.

4. Spring bracket as claimed in any one or several of claims 1 to 3, **characterised in that** the electric motor is formed as an induction motor.

5. Spring bracket as claimed in any one or several of claims 1 to 4, **characterised in that** the spring plate bracket (21) is formed as a pipe and a portion of the coiled spring (1) is located inside the spring plate bracket (21).

6. Spring bracket as claimed in claim 5, **characterised in that** the spring plate (2) is disposed within the spring plate bracket (21) in the end region remote from the coiled spring (1).

7. Spring bracket as claimed in claim 6, **characterised in that** the spring plate bracket (21) has a base (23) which is closed or is provided with a central opening (24), against which base the spring plate (2) is supported.

8. Spring bracket as claimed in any one or several of claims 1 to 7, **characterised in that** the spring plate bracket (21) and the spring plate (2) are formed as one piece.

## Revendications

1. Support de ressort pour un véhicule automobile, pour étayer un ressort bobiné (1) calé entre deux coupelles de ressort (2, 3) avec au moins une coupelle de ressort (2) ajustable axialement au moyen d'une unité d'entraînement avec un mécanisme d'entraînement et un moteur électrique, dans lequel au moins une région de la tige de piston (6) et/ou du tube d'amortisseur (5) d'un amortisseur ou d'une jambe élastique est agencée à l'intérieur du ressort bobiné (1), **caractérisé en ce que** le moteur électrique est réalisé sous la forme d'un moteur annulaire avec un stator (15) externe et un rotor (16) interne, et le rotor (16) porte du côté interne un écrou de déplacement qui ajuste axialement un support (21) de coupelle de ressort, réalisé extérieurement comme une vis sans fin, relié à la coupelle de ressort (2).

2. Support de ressort selon la revendication 1, **caractérisé en ce que** l'écrou de déplacement et le support (21) de coupelle de ressort sont réalisés sous la forme d'une vis à billes.

3. Support de ressort selon la revendication 1 ou la revendication 2, **caractérisé en ce que** le rotor (16) et l'écrou de déplacement sont réalisés d'une pièce.

4. Support de ressort selon une ou plusieurs des revendications 1 à 3, **caractérisé en ce que** le moteur électrique est un moteur à induction.

5. Support de ressort selon une ou plusieurs des revendication 1 à 4, **caractérisé en ce que** le support (21) de coupelle de ressort est tubulaire et une section du ressort bobiné (1) est disposée à l'intérieur du support (21) de coupelle de ressort.

6. Support de ressort selon la revendication 5, **caractérisé en ce que** la coupelle de ressort (2) est agencée dans la région d'extrémité écartée du ressort bobiné (1) à l'intérieur du support (21) de coupelle de ressort.

7. Support de ressort selon la revendication 6, **caractérisé en ce que** le support (21) de coupelle de ressort présente un corps (23) fermé ou pourvu d'un orifice central (24), contre lequel appuie la coupelle de ressort (2).

8. Support de ressort selon l'une quelconque des revendications 1 à 7, **caractérisé en ce que** le support (21) de coupelle de ressort et la coupelle de ressort (2) sont réalisés d'une pièce.
